# EUROPÄISCHE PATENTSCHRIFT

(11) **EP 1 533 398 B1**
(45) Veröffentlichungstag und Bekanntmachung des Hinweises auf die Patenterteilung: **31.08.2011**
(21) Anmeldenummer: 03024372.9
(22) Anmeldetag: 24.10.2003
(51) Int. Cl.: C25C 5/02, C25C 1/08, C25C 1/10, C25D 21/22, C25D 21/18

(54) **Verfahren zur Erzeugung eines einsatzbereiten Elektrolyten aus metallionenhaltigen Abfallprodukte**
Process for producing an electrolyte ready for use out of waste products containing metal ions
Procédé pour la production d'un électrolyte prêt à utilisation à partir de déchets contenant des ions métalliques

(43) Veröffentlichungstag der Anmeldung: 25.05.2005
(73) Patentinhaber: SIEMENS AKTIENGESELLSCHAFT, 80333 München (DE)
(72) Erfinder: Birkner, Jens, 45481 Mülheim A.D.Ruhr (DE); Krüger, Ursus, Dr., 14098 Berlin (DE); Körtvelyessy, Daniel, 13467 Berlin (DE); Reiche, Ralph, 13465 Berlin (DE); Steinbach, Jan, 13353 Berlin (DE); de Vogelaere, Marc, 13581 Berlin (DE)

(56) Entgegenhaltungen:
- DE-A- 19 731 616
- DE-A- 19 850 235
- DE-C- 4 435 774
- FR-A- 2 463 201
- US-A- 4 042 474
- US-A- 4 053 400
- US-A- 5 002 645

## Beschreibung

### Beschreibung

Die Erfindung betrifft ein Verfahren zur Erzeugung eines einsatzbereiten Elektrolyten. Sie betrifft weiter einen derartig erzeugten Elektrolyten und seine Verwendung.

Ein Elektrolyt ist ein Stoff, dessen wässrige Lösungen oder Schmelzen frei bewegliche Ionen enthalten, die beim Anlegen einer elektrischen Spannung in Richtung der Elektroden wandern. Elektrolyte können beispielsweise für die elektrochemische MCrAlY-Beschichtung (M steht für Nickel, Cobalt u. a.; Y steht für Yttrium und/oder Rhenium; Silicium, Hafnium, Tantal können auch enthalten sein) genutzt werden. MCrAlY-Beschichtungen dienen üblicherweise als temperaturbeständiger Korrosions- und Oxidationsschutz insbesondere bei stationären Gasturbinen zur Energieerzeugung und im Triebwerksbereich von Flugzeugen und anderen Verkehrsmitteln.

Für die Beschichtung werden größtenteils thermische Spritzverfahren angewandt. Bei diesem Beschichtungsprozess können jedoch üblicherweise bis zu 70 % des Metallpulvers nicht auf das Bauteil gebracht werden. Dieses Metallpulver stellt somit ein so genanntes Abprodukt dar, welches zwar prinzipiell hochwertig ist, jedoch gemäß Umweltauflagen als Gefahrgut oder gesundheitsschädlicher Stoff zu entsorgen ist.

Beim chemischen oder elektrochemischen Entfernen oder so genannten Strippen von MCrAlY-Schichten im Rahmen der Reparatur und Aufarbeitung von Gasturbinenbauteilen fallen Altelektrolyte mit hohen Konzentrationen der entsprechenden Metalle an. Diese werden zum Teil als kanzerogene und/oder als anders wirkende Giftstoffe eingestuft, und deren Lösungen müssen daher üblicherweise zur Gewichtsreduzierung eingedampft und anschließend aufwendig und kostenintensiv als schwermetallhaltiger Galvanikschlamm entsorgt werden.

Allgemein fallen bei der Oberflächenbehandlung von Metallen, sowohl bei der Galvanotechnik und bei abtragenden Verfahren wie dem Beizen, Ätzen, Brennen u.a., als auch bei der Verarbeitung von metallhaltigen Stoffen aus Chemie, Metallurgie und Umwelttechnik Prozesslösungen an, die mit Kationen der gelösten Metalle oder störenden Fremdmetallen angereichert sind. Durch diese Metallanreicherung haben solche Lösungen oder Altelektrolyte nur eine begrenzte Standzeit und Aufnahmekapazität. Die periodisch erforderliche Erneuerung solcher Bäder ist mit erheblichen Aufwendungen verbunden, sowohl für den Ersatz der eingesetzten Chemikalien als auch zur umweltgerechten Aufarbeitung und Entsorgung der verbrauchten Prozesslösungen. Entsprechende Verfahren sind z. B. aus den US 4,042,474, US 5,002,645, DE 198 50 235, US 4,053,400, DE 44 35 774, FR 24632061 und DE 197 31 616 bekannt.

Wünschenswert ist es deshalb, die Entsorgungskosten von Altelektrolyten und Abprodukten, die bei oben genannten Prozessen entstehen können, zumindest zu mindern oder sogar nahezu vollständig einsparen zu können und zugleich den mit der Beschaffung von Ausgangsstoffen zur Erzeugung eines einsatzbereiten Elektrolyten verbundenen Aufwand besonders gering zu halten.

Der Erfindung liegt daher die Aufgabe zugrunde, ein Verfahren anzugeben, das eine einfache und besonders zuverlässige Elektrolyt-Generierung und -Konditionierung aus metallhaltigen Altelektrolyten und/oder anderen Prozesslösungen und/oder pulverförmigen Metallabfällen erlaubt. Des Weiteren soll eine Verwendung eines derart erzeugten Elektrolyten angegeben werden.

Bezüglich des Verfahrens wird diese Aufgabe gelöst, indem metallionenhaltige Abfallprodukte wie Altelektrolyte, erschöpfte metallhaltige Ätz- oder Beizlösungen und deren Legierungen, verbrauchte Bäder aus der Galvanotechnik oder Extrakte, die bei der Behandlung von Metallschlämmen und metallhaltigen Reststoffen aus der Metallurgie, der chemischen Industrie mit Säuren erhalten werden und/oder pulverförmige Metallabfälle aus einem Plasmaspritz- oder einem anderen Beschichtungsverfahren eingesetzt werden, an der im Hinblick auf den ausgewählten Einsatzzweck als ungeeignet eingestufte Metallionen abgeschieden werden.

Die Erfindung geht dabei von der Überlegung aus, dass die in der Oberflächentechnik oder Metallchemie anfallenden Altelektrolyte, anderen Prozesslösungen und pulverförmigen Metallabfällen mit üblicherweise hohen Metallionenkonzentrationen wegen dieser hochwertigen Bestandteile genutzt werden sollten und nicht, wie bisher vielfach üblich, ohne weitere Verwendung direkt aufwendig entsorgt werden müssen. Dafür sollten diese Abprodukte zur weiteren Verwendung insbesondere einfach und umweltfreundlich aufgearbeitet werden können. Um des Weiteren auch wirtschaftliche Aspekte berücksichtigen zu können, ist eine Einbindung in einen Recyclingprozess sinnvoll. Zu diesem Zweck werden die metallionenhaltigen Abfallprodukte aus Metalloberflächen-Behandlungsprozessen Metalloberflächenbehandlungsprozessen als Ausgangstoffe zur Erzeugung eines Elektrolyten verwendet.

Als metallionenhaltige Abfallprodukte können Altelektrolyte, erschöpfte metallhaltige Ätz- oder Beizlösungen und deren Legierungen, verbrauchte Bäder aus der Galvanotechnik oder Extrakte, die bei der Behandlung von Metallschlämmen und metallhaltigen Reststoffen aus der Metallurgie, der chemischen Industrie mit Säuren erhalten werden und/oder pulverförmige Metallabfälle aus einem Plasmaspritz- oder einem anderen Beschichtungsverfahren eingesetzt werden.

Für eine einfache und besonders effektive Elektrolyt-Generierung und -Konditionierung sollten die Abprodukte in Lösung gebracht sein und der Gehalt an Ionen, die den Herstellungsprozess stören und/oder die weitere Verwendung des Elektrolyten beeinträchtigen können, besonders gering gehalten werden. Aus diesem Grund werden in einer derartigen Metallionen-Mischlösung enthaltene Anionen durch im Hinblick auf einen ausgewählten Einsatzzweck gewählte Anionen ersetzt und aus der dadurch vorbereiteten Metallionen-Mischlösung im Hinblick auf den ausgewählten Einsatzzweck als ungeeignet eingestufte Metallionen selektiv entfernt.

Für eine besonders einfach handhabbare Entfernung unerwünschter Metallionen ist dabei ein Einkammersystem vorgesehen. Darin werden in der vorbereiteten Metallionen-Mischlösung vorzugsweise eine Inertanode und eine Abscheidungselektrode angeordnet, an der im Hinblick auf den ausgewählten Einsatzzweck als ungeeignet eingestufte Metallionen abgeschieden werden.

In spezifizierter Ausführung dieses Verfahrens werden in der vorbereiteten Metallionen-Mischlösung vorteilhafterweise eine Elektrode und eine als Bauteil ausgebildete Abscheidungselektrode angeordnet, an der im Hinblick auf den ausgewählten Einsatzzweck als ungeeignet eingestufte Metallionen abgeschieden werden. Damit ist das Verfahren sowohl zum Erzeugen eines einsatzbereiten Elektrolyten für eine spätere Verwendung als auch gleichzeitig zur Erhöhung der Gebrauchsfähigkeit des betreffenden Bauteils, beispielsweise durch einen schützenden Überzug durch die abgeschiedenen Metallionen, geeignet.

Für einen ungestörten und somit effektiven Verfahrensablauf zur Erzeugung eines vielseitig einsetzbaren Elektrolyten werden störende Anionen abgereichert. Dazu werden insbesondere in der Metallionen-Mischlösung enthaltene Chloridionen zweckmäßigerweise ausgetauscht oder in ihrer Konzentration herabgesetzt. Vorzugsweise erfolgt ihr Austausch gegen Sulfatoder Sulfamationen.

In besonders vorteilhafter Ausgestaltung des Verfahrens werden insbesondere im Hinblick auf die spätere Verwendung dafür unerwünschte Metallionen aus der vorbereiteten Metallionen-Mischlösung entfernt. Für eine besonders selektive und einfach handhabbare Entfernung bietet sich zweckmäßigerweise die Komplexierung der betreffenden Metallionen an. Dafür wird vorteilhafterweise eine selektiv permeable Membran eingesetzt, die die Metallionen-Mischlösung und eine Reinigungslösung voneinander trennt und die in ihren Poren metallkomplexbildende organische Substanzen aufweist (s. "Recycling Handbuch, Strategien, Technologien, Produkte", VDI-Verlag, ISBN 3-18-401 386-3). Diese derart ausgestattete Membran nimmt auf der Seite der vorbereiteten Metallionen-Mischlösung die zu entfernenden Metallionen auf und gibt sie nach Durchleitung auf der Seite der Reinigungslösung wieder ab.

Die Lösungs- und Austauschprozesse bei der Aufbereitung metallionenhaltiger Abfallprodukte werden zweckmäßigerweise durch elektrische Felder und mechanische Schwingungen beschleunigt. Hierzu sind in besonders vorteilhafter Ausgestaltung des Verfahrens Elektroden und/oder Sonotroden vorgesehen, die in Kontakt mit der vorbereiteten Metallionen-Mischlösung und mit der Reinigungslösung gebracht werden.

Für die Beobachtung des Herstellungsverfahrens und die Möglichkeit einer Einflussnahme darauf, wird das gesamte Verfahren zweckmäßigerweise kontinuierlich überwacht. Zu diesem Zweck werden vorteilhafterweise die Grunddaten der Lösungen, wie die einzelnen Ionenkonzentrationen, Temperatur, pH-Wert und Leitfähigkeit der vorbereiteten Metallionen-Mischlösung und/oder der Reinigungslösung sowie des erzeugten Elektrolyten gemessen.

Abhängig von dem späteren spezifischen Einsatzfeld weist der nach einem der obigen Verfahren erzeugte Elektrolyt zweckmäβigerweise eine vergleichsweise hohe Ionenkonzentration der gewünschten Metalle und eine vergleichsweise niedrige Konzentration anderer störender oder unerwünschter Ionen auf. Dafür beträgt der Ionenkonzentrationsbereich vorzugsweise für Nickel, Cobalt und Chrom jeweils etwa 50 bis 500 g/l, der für andere Metalle jeweils etwa 1 bis 100 g/l.

Verwendung kann ein Elektrolyt zweckmäßigerweise im Bereich der Elektrochemie finden. Daher ist der nach einem der obigen Verfahren hergestellte Elektrolyt vorzugsweise für die Metallelektrolyse von Barren, für die elektrochemische Metallbeschichtungen, insbesondere MCrAlY-Beschichtungen (M steht für Nickel, Cobalt u. a.; Y steht für Yttrium und/oder Rhenium; Silicium, Hafnium, Tantal können auch enthalten sein), artähnliche Verfahren oder gegebenenfalls in-situ nach Filter- und Reinigungsstufen im Elektrolytkreislauf eingesetzt.

Die mit der Erfindung erzielten Vorteile bestehen insbesondere darin, dass durch Aufkonzentrierung oder Rekonditionierung von metallhaltigen Ätz-, Beizlösungen und/oder Altelektrolyten und/oder pulverförmigen Metallabfällen unter Zugabe und Separierung bestimmter Substanzen oder Ionenarten ein gebrauchsfertiger Elektrolyt mit bedarfsgerechten Ionenkonzentrationen einfach und kostengünstig erzeugt werden kann. Dazu werden beispielsweise Chloridionen durch Sulfationen oder Sulfamationen ausgetauscht oder zumindest in ihrer Konzentration herabgesetzt und im Hinblick auf den ausgewählten Einsatzzweck als ungeeignet eingestuften Metallionen abgeschieden. Gerade die Wahl der metallionenhaltigen Abfallprodukte aus der Oberflächentechnik oder der Metallchemie als Ausgangsstoffe erlaubt, dass nicht nur Entsorgungskosten gespart und Umweltbelastungen reduziert, sondern auch Ressourcen geschont und Wertschöpfungen oder Verarbeitungszustände erhalten werden, die ansonsten einen zusätzlichen Energie- und Materialaufwand erfordern würden.

Ein Ausführungsbeispiel der Erfindung wird anhand einer Zeichnung näher erläutert. Darin zeigen:
- FIG 1: einen schematischen Aufbau einer ersten Ausfüh- rungsform einer Anlage zur Aufbereitung metallio- nenhaltiger Abfallprodukte aus Metalloberflächenbe- handlungsprozessen,
- FIG 2: einen schematischen Aufbau einer zweiten Ausfüh- rungsform der oben genannten Anlage die Hauptausführungsform, und
- FIG 3: einen schematischen Aufbau einer dritten Ausfüh- rungsform der oben genannten Anlage.

Gleiche Teile sind in allen Figuren mit denselben Bezugszeichen versehen.

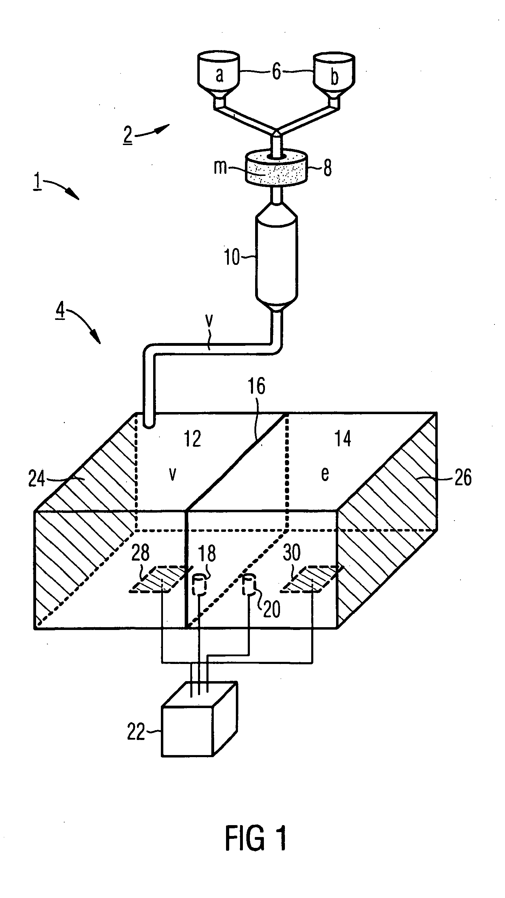

Im Ausführungsbeispiel gemäß FIG 1 ist eine Anlage 1 dargestellt, die eine Vorbereitungsstation 2 für metallionenhaltige Abfallprodukte a, b, und ein nachgeordnetes elektrochemisches System 4 umfasst.

Im Ausführungsbeispiel weist die Vorbereitungsstation 2 Zuführeinrichtungen 6 für flüssige und feste Chemikalien, eine Durchmischungseinrichtung 8 und einen Anionenaustauscher 10 auf. Über die Zuführeinrichtungen 6 werden die metallionenhaltigen Abfallprodukte a, b wie pulverförmiger Metallabfall, der beispielsweise bei Plasmaspritzverfahren angefallen ist, und beispielsweise eine 20 bis 30 gewichtsprozentige Salzsäure aus einem Beizprozess mit Nickel-, Cobalt- und Chrom-Ionen, in der Durchmischungseinrichtung 8 zusammengeführt und damit eine Metallionen-Mischlösung m hergestellt.

Für einen ungestörten und somit effektiven Verfahrensablauf ist die Konzentration bestimmter Anionen gering zu halten.
Das Verfahren ist im Ausführungsbeispiel daher in besonderem Maße auf eine Abreicherung von Chloridionen ausgerichtet. Die Metallionen-Mischlösung m wird über einen entsprechend ausgestatteten Anionenaustauscher 10 geführt. Damit wird die Metallionen-Mischlösung m für das elektrochemische System 4 vorbereitet. Es liegt also beim Eintritt in das elektrochemische System 4 eine vorbereitete Metallionen-Mischlösung v vor.

Das elektrochemische System 4 umfasst im ersten Ausführungsbeispiel, wie in FIG 1 gezeigt, zwei Kammern 12 und 14, die durch eine selektiv permeable Membran 16 voneinander getrennt sind. Die Membran 16 verhindert dabei eine Vermischung der in die eine Kammer 12 geleiteten vorbereiteten Metallionen-Mischlösung v mit einer in der anderen Kammer 14 befindlichen, ionenarmen, wässrigen oder nicht wässrigen, so genannten Reinigungslösung e.

In die vorbereitete Metallionen-Mischlösung v und in die Reinigungslösung e eingetaucht sind Messfühler 18 und 20 zur Bestimmung der einzelnen Ionenkonzentrationen, der Temperatur, des pH-Werts und der Leitfähigkeit o.ä. Dadurch ist eine kontinuierliche Überwachung über eine Überwachungs- und Steuerungseinheit 22, gegebenenfalls on-line, des gesamten Verfahrensablaufs ermöglicht.

Im Hinblick auf die Erzeugung eines vielseitig einsetzbaren Elektrolyten sind je nach Einsatzgebiet bestimmte Metallionen unerwünscht. Diese sollen daher vollständig entfernt oder zumindest ausreichend abgereichert werden. Dazu bietet sich die Komplexbildung mit organischen Substanzen an. Im ersten Ausführungsbeispiel ist die Membran 16 aus einer Keramik gebildet, die in ihren Poren mit spezifischen, metallkomplexbildenden organischen Substanzen (z. B. für Kupfer LIX 860 - 5-Dodecyl-Salicyl-Aldoxim in Lösungsmittel Kerosin) ausgestattet ist (s. "Recycling Handbuch, Strategien, Technologien, Produkte", VDI-Verlag, ISBN 3-18-401 386-3).

Diese metallkomplexbildenden organischen Substanzen nehmen auf der Seite der vorbereiteten Metallionen-Mischlösung v die zu entfernenden Metallionen auf und geben sie nach Durchleitung auf der Seite der Reinigungslösung e wieder ab.

Die Lösungs- und Austauschprozesse bei der Aufbereitung metallionenhaltiger Abfallprodukte a, b werden durch elektrische Felder und mechanische Schwingungen beschleunigt. Hierzu sind im Ausführungsbeispiel in beiden Kammern 12 und 14 Elektroden 24 und 26 und Sonotroden 28 und 30 vorgesehen, die in Kontakt mit der vorbereiteten Metallionen-Mischlösung v und mit dem Basiselektrolyten e gebracht sind.

Der im obigen elektrochemischen System 4 erzeugte Elektrolyt weist (in der Kammer 12) eine vergleichsweise hohe Ionenkonzentration der gewünschten Metalle und eine vergleichsweise niedrige Chloridionenkonzentration auf. Der Ionenkonzentrationsbereich beträgt dabei für Nickel, Cobalt und Chrom jeweils etwa 50 bis 500 g/l, der für andere Metalle etwa 1 bis 100 g/l. Die genauen Metallionenkonzentrationen hängen dabei von der später gewünschten galvanisch abzuscheidenden Legierung ab.

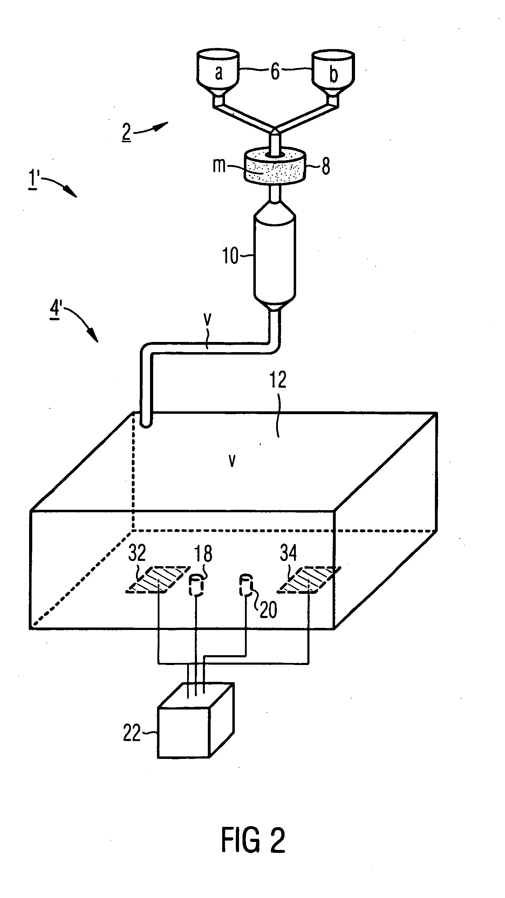

In dem Hauptbeispiel (weiterhin als zweites Ausführungsbeispiel angegeben) umfasst das elektrochemische System 4' der Anlage 1', wie in FIG 2 gezeigt, beispielsweise nur eine Kammer 12, in der in der vorbereiteten Metallionen-Mischlösung v eine Inertanode 32 und eine Abscheidungselektrode 34 angeordnet sind, wobei sich an letzterer als ungeeignet eingestufte Metallionen abscheiden, um den gewünschten Elektrolyt herzustellen.

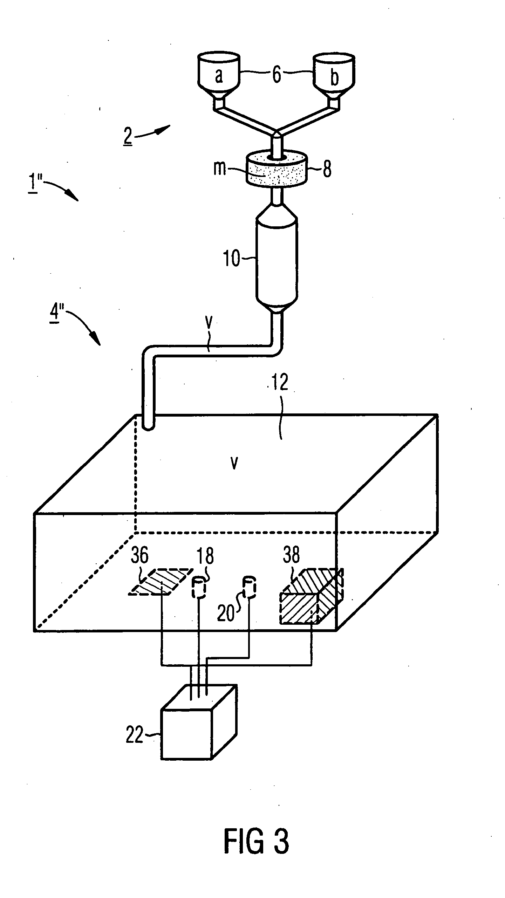

In weiterer spezifizierter Ausführung weist das elektrochemische System 4" der Anlage 1'', wie in FIG 3 gezeigt, eine Kammer 12 auf, in der in der vorbereiteten Metallionen-Mischlösung v eine Elektrode 36 und ein Bauteil 38 vorgesehen sind, wobei letzteres als Abscheidungselektrode geschaltet ist. Damit ist das Verfahren sowohl zum Erzeugen eines einsatzbereiten Elektrolyten für eine spätere Verwendung als auch gleichzeitig zur Erhöhung der Gebrauchsfähigkeit des betreffenden Bauteils, beispielsweise durch einen schützenden Überzug durch die abgeschiedenen Metallionen, geeignet.

Auch in den vorbereiteten Metallionen-Mischlösungen v der zweiten und dritten Ausführungsbeispiele können Messfühler 18 und 20 zur Bestimmung der Ionenkonzentrationen, der Temperatur, des pH-Werts und der Leitfähigkeit o.ä eingetaucht sein. Dadurch ist eine kontinuierliche Überwachung über eine Überwachungs- und Steuerungseinheit 22 gegebenenfalls on-line, des gesamten Verfahrensablaufs ermöglicht.

Ebenfalls in den vorbereiteten Medallionen-Mischlösungen v der zweiten und dritten Ausführungsbeispiele können Sonotroden 28 und 30 vorhanden sein.

Ebenfalls in den vorbereiteten Metallionen-Mischlösungen v der zweiten und dritten Ausführungsbeispiele kann die Kammer 14 vorhanden sein.

## Patentansprüche

1. Verfahren zur Erzeugung eines einsatzbereiten Elektrolyten,
bei dem metallionenhaltige Abfallprodukte (a, b) wie Altelektrolyte,
erschöpfte metallhaltige Ätz- oder Beizlösungen und deren Legierungen,
verbrauchte Bäder aus der Galvanotechnik oder Extrakte, die bei der Behandlung von Metallschlämmen und metallhaltigen Reststoffen aus der Metallurgie, der chemischen Industrie mit Säuren erhalten werden und/oder pulverförmige Metallabfälle aus einem Plasmaspritz- oder einem anderen Beschichtungsverfahren aufbereitet werden,
indem eine Metallionen-Mischlösung (m) aus den Abfallprodukten (a, b) hergestellt wird,
wobei die Metallionen-Mischlösung (m) durch einen Ionentauscher (10) geführt wird,
und wobei
in der **dadurch** erzeugten vorbereiteten Metallionen-Mischlösung (v) eine Inertanode (32) und eine Abscheidungselektrode (34) angeordnet werden,
an der im Hinblick auf den ausgewählten Einsatzzweck als ungeeignet eingestufte Metallionen abgeschieden werden.

2. Verfahren nach Anspruch 1,
bei dem in der vorbereiteten Metallionen-Mischlösung (v) eine Elektrode (36) und eine als Bauteil (38) ausgebildete Abscheidungselektrode angeordnet werden,
an der im Hinblick auf den ausgewählten Einsatzzweck als ungeeignet eingestufte Metallionen abgeschieden werden.

3. Verfahren nach Anspruch 1 oder 2,
bei dem in der Metallionen-Mischlösung (m) enthaltene Chloridionen ausgetauscht oder zumindest in ihrer Konzentration herabgesetzt werden.

4. Verfahren nach Anspruch 3,
bei dem in der Metallionen-Mischlösung (m) enthaltene Chloridionen durch Sulfat- oder Sulfamationen ausgetauscht werden.

5. Verfahren nach einem der Ansprüche 1 bis 4,
bei dem die im Hinblick auf den ausgewählten Einsatzzweck als ungeeignet eingestuften Metallionen durch eine selektiv permeable Membran (16), die die vorbereitete Metallionen-Mischlösung (v) und eine Reinigungslösung (e) voneinander trennt und die in ihren Poren metallkomplexbildende organische Substanzen aufweist, selektiv entfernt werden.

6. Verfahren nach Anspruch 5,
bei dem Elektroden (24, 26) und/oder Sonotroden (28, 30) in Kontakt mit der vorbereiteten Metallionen-Mischlösung (v) und mit der Reinigungslösung (e) gebracht werden.

7. Verfahren nach einem der Ansprüche 1 bis 6,
bei dem die Ionenkonzentrationen,
die Temperatur,
der pH-Wert und
die Leitfähigkeit der vorbereiteten Metallionen-Mischlösung (v) bzw. des erzeugten Elektrolyten und gegebenenfalls der Reinigungslösung (e) gemessen und kontrolliert werden.

8. Verwendung eines nach dem Verfahren nach einem der Ansprüche 1 bis 7 hergestellten Elektrolyten für die Metallelektrolyse von Barren,
für die elektrochemische MCrAlY-Beschichtung (M steht für Nickel, Cobalt u. a.; Y steht für Yttrium und/oder Rhenium; Silicium, Hafnium, Tantal können auch enthalten sein), artähnliche Verfahren oder gegebenenfalls in-situ nach Filter- und Reinigungsstufen im Elektrolytkreislauf.

## Claims

1. Process for producing a ready-to-use electrolyte, in which waste products (a, b) containing metal ions, such as used electrolytes, exhausted metal-containing etching or pickling solutions and their alloys, used baths from the electroplating industry or extracts which are obtained when metal slurries and metal-containing residues from metallurgy and the chemical industry are treated with acids, and/or pulverulent metal wastes from a plasma spraying or other coating process, are treated by producing a metal ion mixed solution (m) from the waste products (a, b), the metal ion mixed solution (m) being passed through an ion exchanger (10),
and
an inert anode (32) and a deposition electrode (34), at which metal ions which are categorized as unsuitable for the intended use selected are deposited, being arranged in the prepared metal ion mixed solution (v) thereby obtained.

2. Process according to Claim 1, in which an electrode (36) and a deposition electrode, which is designed as a component (38) and at which metal ions which are categorized as unsuitable for the intended use selected are deposited, are arranged in the prepared metal ion mixed solution (v).

3. Process according to Claim 1 or 2, in which chloride ions contained in the metal ion mixed solution (m) are exchanged, or at least the concentration of these ions is reduced.

4. Process according to Claim 3, in which chloride ions contained in the metal ion mixed solution (m) are exchanged for sulfate or sulfamate ions.

5. Process according to one of Claims 1 to 4, in which the metal ions which have been categorized as unsuitable for the intended use selected are selectively removed by a selectively permeable membrane (16) which separates the prepared metal ion mixed solution (v) and a cleaning solution (e) from one another and has organic substances which form metal complexes in its pores.

6. Process according to Claim 5, in which electrodes (24, 26) and/or sonotrodes (28, 30) are brought into contact with the prepared metal ion mixed solution (v) and with the cleaning solution (e).

7. Process according to one of Claims 1 to 6, in which the ion concentrations, the temperature, the pH and the conductivity of the prepared metal ion mixed solution (v) and/or of the electrolyte produced and if appropriate of the cleaning solution (e) are measured and monitored.

8. Use of an electrolyte produced in accordance to the process according to one of Claims 1 to 7 for the metal electrolysis of bars, for electrochemical MCrAlY coating (M stands for nickel, cobalt, etc.; Y stands for yttrium and/or rhenium; silicon, hafnium, tantalum may also be present), processes of a similar type or if appropriate in situ after filtering and cleaning stages in the electrolyte circuit.

## Revendications

1. Procédé de production d'un électrolyte prêt à l'emploi, dans lequel des produits ( a, b ) de déchet comme de l'électrolyte hors d'usage,
des solutions d'attaque ou de satinage épuisées contenant du métal et leurs alliages,
des bains de la technique galvanique ou des extraits sont obtenus avec des acides lors du traitement de boues métalliques et de résidus contenant des métaux provenant de la métallurgie, de l'industrie chimique et/ou des déchets métalliques pulvérulents provenant d'un procédé de dépôt par pistolage au plasma ou d'un autre procédé de dépôt,
en produisant une solution ( m ) mixte d'ions métalliques à partir des produits ( a, b ) de déchet,
la solution ( m ) mixte d'ions métalliques étant passée dans un échangeur ( 10 ) d'ions,
et dans lequel
dans la solution ( v ) mixte d'ions métalliques produite et préparée sont placées une anode ( 32 ) inerte et une électrode ( 34 ) de dépôt,
sur laquelle, au vu du but d'utilisation sélectionné, on sépare des ions métalliques classés comme inappropriés.

2. Procédé suivant la revendication 1,
dans lequel, dans la solution ( v ) mixte d'ions métalliques préparée, on place une électrode ( 36 ) et une électrode de dépôt constituée sous la forme d'un élément ( 38 ),
sur laquelle, au vu du but d'utilisation sélectionné, des ions métalliques classés comme inappropriés sont déposés.

3. Procédé suivant la revendication 1 ou 2,
dans lequel on remplace des ions chlorures contenus dans la solution ( m ) mixte d'ions métalliques ou on en diminue au moins la concentration.

4. Procédé suivant la revendication 3,
dans lequel on remplace des ions chlorures contenus dans la solution ( m ) mixte d'ions métalliques par des ions sulfates ou par des ions sulfamates.

5. Procédé suivant l'une des revendications 1 à 4,
dans lequel les ions métalliques classés comme inappropriés, au vu du but d'utilisation sélectionné, sont éliminés sélectivement par une membrane ( 16 ) perméable sélectivement, qui sépare l'une de l'autre la solution ( v ) mixte d'ions métalliques préparée et une solution ( e ) d'épuration et qui a dans ses pores des substances organiques formant des complexes métalliques.

6. Procédé suivant la revendication 5,
dans lequel des électrodes ( 24, 26 ) et/ou des sonotrodes ( 28, 30 ) sont mises en contact avec la solution ( v ) mixte d'ions métalliques préparée et avec la solution ( e ) d'épuration.

7. Procédé suivant l'une des revendications 1 à 6,
dans lequel les concentrations d'ions,
la température,
le pH et
la conductivité de la solution ( v ) mixte d'ions métalliques préparée ou de l'électrolyte produit et, le cas échéant, de la solution ( e ) d'épuration sont mesurés et contrôlés.

8. Utilisation d'un électrolyte produit par le procédé suivant l'une des revendications 1 à 7, pour l'électrolyse de métal de barres,
pour le dépôt électrochimique de MCrAlY ( M représentant nickel, cobalt, entre autres ; Y représentant yttrium et/ou rhénium ; silicium, hafnium, tantale pouvant être aussi contenus ), pour des procédés du même type ou, le cas échéant, in situ après des étapes de filtration et d'épuration dans le circuit d'électrolyte.
